(19) Europäisches Patentamt
European Patent Office
Office européen des brevets

(11) Publication number: 0 548 062 A1

# (12) EUROPEAN PATENT APPLICATION

(21) Application number: 93200645.5

(51) Int. Cl.5: G03C 7/388, G01N 21/85, G01N 25/14

(22) Date of filing: 18.09.91

This application was filed on 05 - 03 - 1993 as a divisional application to the application mentioned under INID code 60.

(30) Priority: 27.09.90 GB 9021003

(43) Date of publication of application:
23.06.93 Bulletin 93/25

(84) Designated Contracting States:
BE CH DE GB IT LI

(71) Applicant: EASTMAN KODAK COMPANY
343 State Street
Rochester, New York 14650-2201(US)

(84) BE CH DE IT LI

(71) Applicant: KODAK LIMITED
Kodak House Station Road
Hemel Hempstead Hertfordshire HP1 1JY(GB)

(84) GB

(72) Inventor: Young, David John
39 Carpenters Wood Drive
Chorley Wood, Hertfordshire WD3 5RN(GB)
Inventor: Canterford, David
96 Durham Road
Surrey Hills, Victoria 3127(AU)
Inventor: Priest, William James
260 Gray Shores Road
Geneseo, New York 14454(US)

(74) Representative: Daley, Michael John et al
F.J. CLEVELAND & COMPANY 40/43
Chancery Lane
London, WC2A 1JO (GB)

(54) Method for assessing crystallization values in an emulsion.

(57) The present invention relates to a method for assessing crystallization values in an emulsion, for example of a photographic stabilizer and/or a photographic coupler. It has been found that the propensity of a dispersion to crystalize is much reduced if the aqueous phase is relatively increased beyond a certain critical level. This effect is more marked if the dispersion is also incubated at about 40°C for 10 - 20 hours.

The invention provides a method for assessing crystallization values of a photographic dispersion utilizing colorimetery.

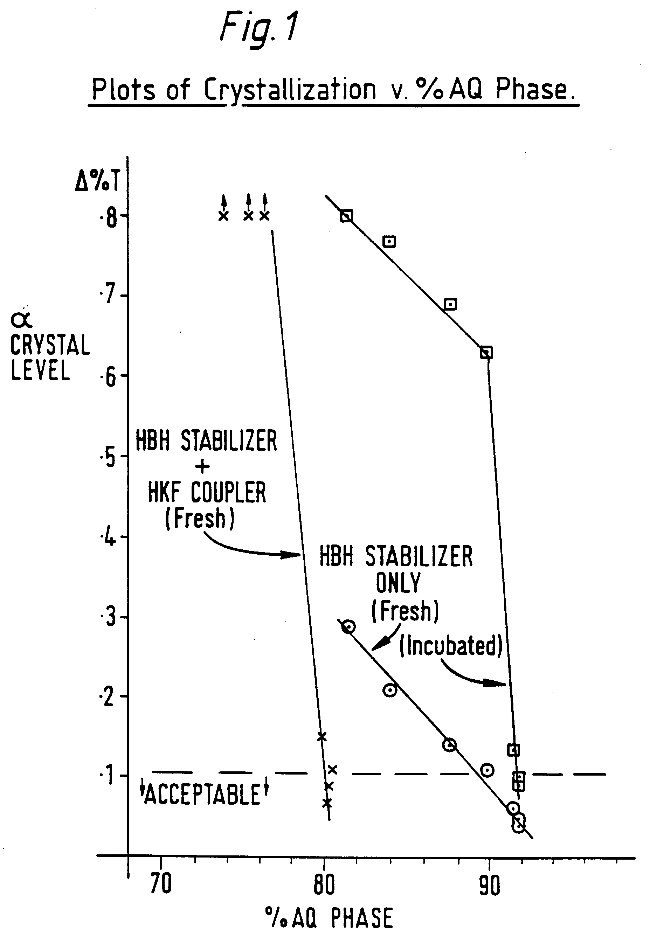

Fig.1 Plots of Crystallization v. %AQ Phase.

EP 0 548 062 A1

EP 0 548 062 A1

The present invention relates to a method for assessing crystallization values for an oil-in-water emulsion, and particularly for a photographic dispersion.

In the general sense the invention assists in the reduction of crystallization in chemical systems, and particularly to the modification of the crystallization characteristics of photographic stabilizers and couplers, for example, 2-t-butyl-4-methyl-6[(2-ethoxy-3-t-butyl-5-methyl) benzyl]phenol, hereinafter referred to as compound A and to compounds having similar crystallization characteristics thereto.

The compound A is of particular interest because it is used as a dye stabilizer in photographic dispersions. Particularly it is utilized as a stabilizer for image dyes.

Photographic dispersions, particularly those including stabilizers and/or couplers are well known in the art to have the problem of crystallization. Thus at the required concentration of oil soluble components, crystals thereof tend to form during manufacture, storage, and in use, which impair performance.

One approach to preventing crystallization of these stabilizers and couplers and other compounds has been to add various additives to the stabilizer dispersion in order to delay or prevent crystallization. Whereas the technique can work effectively, the extra additives required to achieve this also tend to modify the photographic action of the dispersion. As demands for quality increase it becomes more necessary for photographic dispersions to contain only those components which have a desired photographic effect.

Couplers and stabilizers in accordance with the present invention tend to be present in photographic dispersions as a supersaturated solution in an oily solvent. During normal keeping and handling of such dispersion whether in liquid or in solid form, the coupler is thermodynamically likely to crystallize. On keeping it is found that the crystals grow both in number and size. The degree of crystallization may be estimated by means of microscopy or by more quantative tests. It is assumed that the crystallization mechanism is autocatalytic whereby a "seed" or "nucleus" initates the growth of further crystallization. If the residual "seed" crystals which always exist to a greater or lesser extent after homogenization can be reduced, or if the migration of the coupler to the seed can be interrupted, the crystallization rate is reduced.

We have now found that the photographic stabilizer and/or the coupler system dispersions have crystallization values which do not behave in the expected way and that as a result there is a critical value at which the crystallization propensity is markedly reduced following a very small further increase in the percentage of aqueous gelatin solution whether in the presence of a coupler or not.

It will be appreciated that the addition of more cystallizing species or the raising of the temperature of the dispersion tends initially to increase the crystallization value. However at a certain percentage of aqueous phase the crystallization value of all coupler and/or stabilizer/coupler systems examined tends to fall significantly.

This phenomenon is of value in the design of photographic dispersion systems since if the crystallization values can be held at a low value signficantly better quality chemical dispersions can be achieved particularly in the photographic field.

According therefore to the present invention there is provided a method of assessing crystallization values of a dispersion which comprises the steps of:

forming a solubilizing solution for a test dispersion,

heating said solubilizing solution to a predetermined reaction temperature at or about the melting point of the test dispersion,

inserting a turbidimeter probe into the heated solubilized solution to give a base line value,

melting the dispersion and injecting the same into the solution to give a value of %T at time t = 0

conducting turbidimetry to chart the translation of the dispersion to a solubilized dispersion to give a value at %T changing with time, continuing said readings for a predetermined time to give an extrapolatable plot, and extrapolating %T back to t = 0 to give value %Tdif and if necessary comparing %Tdif against a calibration curve to give a crystallization value.

The crystallization value is a measure of the scattered light caused by the crystals so as to produce a semi-quantative function of percentage crystallization as will be described below:-

In a particularly preferred form of dispersion for use with the invention a photographic coupler is 2-[4-(4-hydroxyphenylsulphonyl)phenoxy]-2-(2,2-dimethylpropanoyl)-N-[5-methanesulphonamido-2-(4-t-octylphenoxy)phenyl]acetamide. For convenience this compound is referred to herein as compound B.

The dispersion may be incubated for a significant period at an elevated temperature. The significant period is preferably about 16 hours but this may range from 5 - 20 hours. The temperature may be any elevated temperature but is preferably between 30 and 50ºC most preferably about 40ºC.

The main solvent utilized herein is preferably dibutylphthalate whereas the auxiliary solvent is preferably 2,(2'-butoxyethoxy)ethylacetate. The surfactant may be any suitable surfactant known in the art, but is most preferably a surfactant sold under the name Alkanol XC by Du Pont. The gelatine for the dry gel is preferably a class 88 gelatine.

2

As will be appreciated the stabilizer dispersions in accordance with the present invention may either be in the form of the stabilizer per se, or in the form of a stabilizer and coupler.

In the former condition it is desired that the stabilizer and/or the coupler shall be in a concentration such that it gives a crystallization value of less than 0.15, and preferably less than 0.1.

Where a stabilizer and coupler dispersion is considered jointly the same values are achieved at rather lower levels of aqueous phase.

The method in accordance with the present invention enables a dispersion, which in all other respects contains all the required components for chemical reaction, to be modified to a condition in which it shows a much reduced tendency to crystallize without adding further new and untested components. The crystallization values are obtained by means of the novel testing method of the invention.

The calibration curve may be achieved either by establishing crystallization values for test dispersions by microscopic means, by rapidly filtering off the crystals from a test solution and weighing the crystals, or by adding known weights of coupler crystals.

The test dispersion is preferably a photographic dispersion including a stabilizer and/or a coupler; for example compounds A and B as given above.

Heating may take place at 45 - 65°c and preferably at 50 - 55°c when the melting point of the test dispersion is below about 50°c. The % of test dispersion is preferably about 10% of the solubilizing solution. Preferably the solubilizing solution is alkaline and contains a surfactant. It is convenient if the colorimeter includes a chart recorder.

To assist in the performance of the invention there may be provided an apparatus for the performance of the above assessment method which comprises:

a) a heatable transparent cell including stirring means,

b) a colorimeter probe positioned in said cell,

c) means for control of the temperature of said cell and means for introducing both the test dispersion and the solubilizing solution to the cell; and

d) recording means for recording the light scattering effects of the solubilization process.

Preferably the stirring means is a magnetic stirrer and the heatable transparent cell is a double walled glass cell operatively associated with a thermostatic bath.

The invention will now be illustrated, with reference to the accompanying drawings to be read with the following Examples:-

Figure 1 shows a graph of crystallization values against percentage stabilizer combining the results of Tables 1 and 2.

Figure 2 shows a glass colorimetery cell for use with the present invention,

Figure 3 shows a schematic arrangement of an apparatus for obtaining crystallization values for use, inter alia, in the present invention, and

Figure 4 shows a typical trace to obtain a crystallization value.

In addition to those referred to above, further examples of dispersions displaying the effect described are summarized below, together with their crystallization test results against percent stabilizer with respect to total aqueous phase:

Dispersions containing stabilizer (compound A) and no coupler:

## TABLE 1

Oil Phase

| Stabilizer (A) | 11 | 11 | 11 | 11 | 11 | 11 | 11 |
|---|---|---|---|---|---|---|---|
| Main solvent | 6 | 6 | 6 | 6 | 6 | 6 | 6 |

Aq.phase

| Water | 58 | 69 | 92 | 115 | 142 | 148 | 152 |
|---|---|---|---|---|---|---|---|
| Dry gel | 8.5 | 10 | 14 | 17 | 24 | 21 | 19 |
| Surf. | 8.5 | 10 | 14 | 17 | 24 | 21 | 19 |

| Crystals, fresh | .29 | .21 | .14 | .11 | .06 | .05 | .04 |
|---|---|---|---|---|---|---|---|
| Crystals after incubation | .80 | .77 | .69 | .62 | .11 | .09 | .10 |
| %Stabilizer | 14.7 | 12.4 | 9.2 | 7.4 | 5.8 | 5.8 | 5.8 |
| %Aq.phase | 81.5 | 84.0 | 87.6 | 89.8 | 91.8 | 91.8 | 91.8 |
| Water:dry gel (or surfactant) | 6.8 | 6.9 | 6.6 | 6.7 | 5.9 | 7.0 | 8.0 |

An acceptable figure for crystallization is below about 0.15 and more preferably below about 0.1; it is clear therefore that when the volume of aqueous phase is raised so that the percent stabilizer is below about 7 or the % of aqueous phase is above 90% then the crystallization propensity is reduced to an acceptable level in this type of dispersion. The last three columns demonstrate that changing the amount of dry gel, or the amount of surfactant, has little effect on the crystallization level.

The acceptable level for crystallization is modified by the use of incubation, in this case at 40°C for 16 hours. If reference is made to Figure 1 it will be seen that the fresh solution falls below the acceptable level (b) at a concentration of about 10% stabilizer. Accordingly when the composition is made fresh a 10% solution of stabilizer meets the upper limits of the crystallization values required. However prolonged storage or application of incidental heat to this dispersion will cause unacceptable crystallization and accordingly it would be necessary to maintain this dispersion at a low temperature or use it immediately if there was not to be an unwarranted deterioration of quality.

If the fresh solution is subjected to incubation a first effect is to markedly increase the crystallization value as would be expected. However at a stabilizer concentration, in this instance, of between 6 and 7.5% crystallization values fall from 0.63 to 0.15 i.e. they fall through the critical value. This effect is even more marked in the presence of a stabilized solution in which a change in percentage stabilizer from 5.5 to 4.5% has the effect of reducing the crystallization value from about 0.8 to 0.13. Thus the critical value will lie between 4.5 and 5.5% stabilizer, or above about 80% aqueous phase depending on where precisely the uppermost acceptable crystallization value is to be set.

A second set of examples demonstrate the effects when stabilizer (compound A) and coupler (compound B) are present:

## TABLE 2

### Oil Phase

| Coupler (B) | 33 | 33 | 33 | 27 | 27 | 28 | 28 |
|---|---|---|---|---|---|---|---|
| Stabilizer (A) | 11 | 11 | 11 | 9 | 9 | 7 | 7 |
| Main solv. | 8 | 8 | 8 | 7 | 7 | 7 | 14 |
| Aux. solv. | 8 | 8 | 8 | 7 | 7 | 7 | 0 |

### Aq.phase

| Water | 133 | 140 | 150 | 163 | 160 | 163 | 163 |
|---|---|---|---|---|---|---|---|
| Dry gel | 22 | 22 | 22 | 19 | 22 | 19 | 19 |
| Surf. | 22 | 22 | 22 | 17 | 22 | 17 | 17 |
| Cryst. | .8+ | .8+ | .8+ | .15 | .11 | .09 | .07 |
| %Aq Phase | 74.7 | 75.4 | 76.4 | 79.9 | 80.3 | 80.2 | 80.2 |
| %Stabilizer | 6.2 | 6.0 | 5.7 | 4.5 | 4.4 | 3.5 | 3.5 |

It is clear that for this type of dispersion, containing coupler as well as stabilizer, that a percent stabilizer figure below about 4, or % aqueous phase above about 80% produces an acceptable crystal level. The two examples show that it is necessary to adjust the ratio of gel to crystallizing compound according to the overall formulation of the dispersion. A single crystallizer to gel ratio is not appropriate for every dispersion containing that crystallizer.

Without being able to account definitively for the reasons for the above effects it is believed to be related to an increase in the separation of droplets and nuclei.

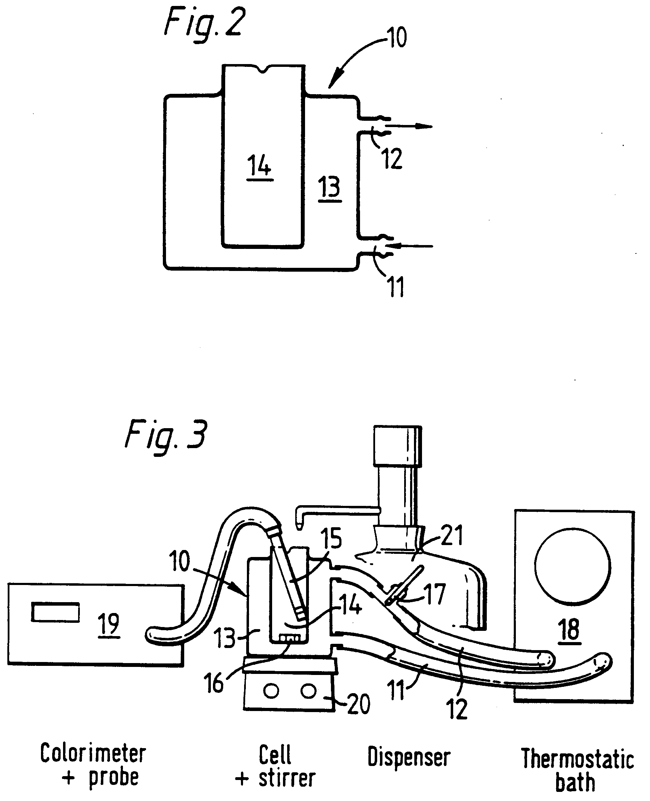

As is shown in Figures 2 and 3 an apparatus for assessing the crystallization values in accordance with the present invention is provided with a glass cell of Figure 2 and a general apparatus as shown in Figure 3. The glass cell 10 of Figure 2 is a double walled glass container having an inner container 14 for the containment of the solubilizing solution and the photographic dispersion under test and a jacket 13 provided with an inlet 11 and an outlet 12 from a thermostatic bath 18 (Churchill type).

The temperature of the cell is measured by means of a thermometer 17 interposed in the return line 12.

The glass cell 10 is positioned upon a magnetic stirring device 20 which acts upon a magnetic stirring element 16 positioned in the bottom of the inner container 14.

A turbidimetery probe 15 is positioned in the inner container 14 and is operatively connected in the usual way to a standard colour chart recording turbidimeter 19 (Brinkmann Probe Colorimeter type PC800 with 545nm filter).

A dispenser 21 is provided for the dispensing of solubilizing solution to the inner container 14.

The photographic dispersion is added by means of a graduated hypodermic syringe and cannula.

In order to make a solubilizing solution for the said dispersion the following solution was made up (to make 1 litre).

| 10% Triton X-100 (Rohm and Haas) | 562ml |
| 2.5% Solumin FX85SD (25%) (ABM Chemicals)[oo] | 281ml |
| 2-phenoxyethanol | 39ml |
| 9% Alkanol XC/2% ammonia* | 118ml |

Note * To a 500ml conical flask was added 20ml of distilled or demineralized water then (carefully) 30ml of 880 ammonia, and finally 450ml of 10% alkanol XC surfactant solution. Mixture was effected by stirring, not shaking, in order to avoid foam formation.

In order to operate the process in accordance with the present invention the thermostatic bath was switched on and adjusted so that an equilibrium temperature at the thermometer near the outlet from the double-walled cell was 50°c plus or minus 0.5°c. The turbidimeter was actuated and calibrated according to the manufacturer's instructions with a 545nm filter was inserted.

20ml of the solubilization solution was then added gently to avoid foaming from a dispensing burette. When any remaining bubbles had risen to the surface the magnetic stirrer was switched on at a speed which created only a moderate vortex at the surface.

The probe 15 was then inserted into the glass container 14 such that its operative tip was about halfway between the central axis and the wall, taking care not to trap bubbles. The tip was then positioned about 1cm above the stirrer bar 16. Mirror supports being positioned at right angles to the flow to allow any bubbles to be swept straight through the light beam.

With the chart recorder switched on the temperature of the solution was allowed to reach 50°c such that the chart trace produced a straight base line.

The dispersion was then melted at 50-55°c and 2ml thereof was injected into the solution at a steady stream near the stirrer so that the dispersion solubilized rapidly (time t = 0). The chart trace rose rapidly and then fell as the milky dispersion solubilized. The trace levelled off and then slowly rose as fresh crystals precipitated in the solution. This trace was allowed to run for 5-10 minutes so that a good extrapolatable line is produced. The experiment was then terminated and the line extrapolated back to t = 0; the difference between this value of %T and the base line %T at t = 0 ( = %Tdif.) is the measure of the degree of crystallization of the dispersion. The values for % crystallization are interpolated from a calibration curve obtained for example by the addition of a known weight of ball-milled coupler to fresh dispersion, or by a calibration curve created by filtering off the crystals rapidly.

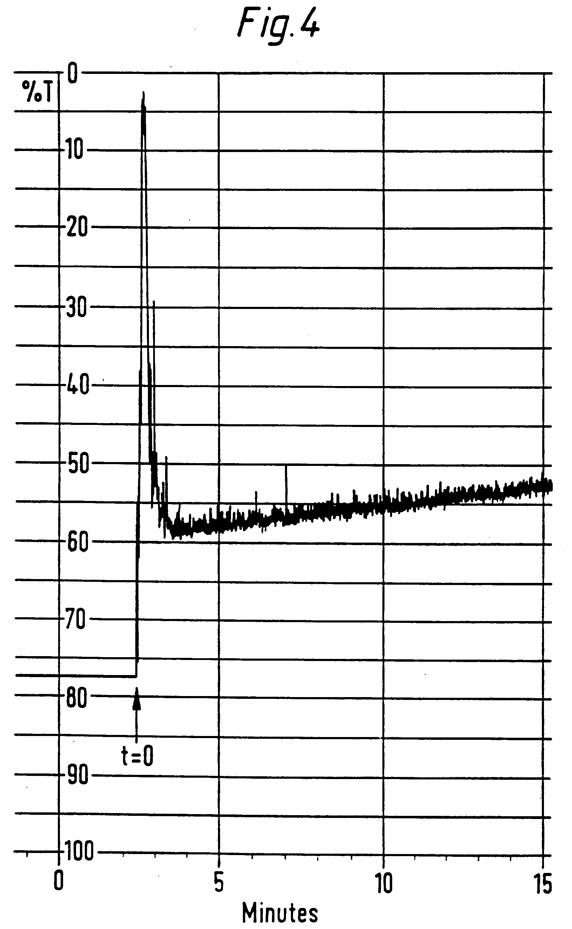

A typical trace is shown in Figure 4. The spikes in the curve appearing after the addition of the dispersion at t = 0 are caused by the crystals passing through the light beam of the probe. The higher the crystal content the higher the spikes become.

Reproducibility

Experiment 1: Repeat measurements (at least 5) were made on batches of fairly old EKTACOLOR Paper dispersions. The results are summarized below:

| Dispersion No. | Age | Mean %T dif. | Standard Deviation |
|---|---|---|---|
| 1 | 4 months | 11.2 | 1.55 |
| 2 | 4.5 months | 36.3 | 1.72 |
| 3 | 5 months | 23.1 | 1.88 |

Experiment 2: Duplicate measurements of %T dif. were made on 13 different PD 333 dispersions having %T dif. varying from 7% to 30%, and an overall standard deviation was calculated using RSE software:

| Dispersion No. | 1st %T dif. | 2nd %T dif. |
|---|---|---|
| 091 | 14.7 | 14.0 |
| 092 | 20.0 | 17.5 |
| 093 | 14.4 | 14.0 |
| 094 | 22.0 | 22.8 |
| 095 | 16.0 | 16.9 |
| 096 | 20.0 | 20.5 |
| 098 | 24.9 | 27.0 |
| 099 | 13.1 | 12.5 |
| 100 | 32.0 | 24.9 |
| 101 | 14.8 | 15.2 |
| 102 | 18.1 | 21.0 |
| 103 | 20.3 | 17.5 |
| 4604 | 7.6 | 7.8 |

Note The volumes for crystallization quoted in the earlier sections of this document were obtained by dividing the values of %Tdif. by 100 and correcting to 2 decimal places.

This example illustrates the general observation of higher reproducibility with lower crystal content.

The above 13 results give an overall calculated standard deviation of 1.30 for %T dif.

In order to decide if the instrumental part of this analytical procedure was having a significant effect upon the results it was necessary to make a regular series of measurements on a test sample which was known not to vary significantly over the course of the largest likely experiment series.

In the present case this requirement presented something of a dilemma since probably all conventional dispersions crystallize slowly on keeping for the several months which are demanded in practice. It was therefore necessary to search for another material which would mimic a moderately crystalline dispersion but would also satisfy the following conditions:

1. Essential Properties

    a. Stable over months,
    b. reasonably non-toxic,
    c. Non-flammable; and
    d. Similar transmittance to averagely crystallized dispersion.

2. Preferred Properties

    e. Non-gelling;
    f. Similar scattering properties i.e. non spherical particles;
    g. Aqueous, or at least water miscible (for cleaning);
    h. No further dilution (for simplicity);
    i. Inexpensive; and
    j. Readily available.

Collidal silica was chosen as the material which satisfied most of the above properties. Specifically "Ludox" TM of DuPont was chosen. The sample used was at least 5 years old and showed no signs of flocculation after storage at ambient temperatures. "Ludox" shows the typical translucency of a moderately crystallized, solubilized dispersion and is an aqueous suspension which can be used straight from the bottle. The %T of small unstirred samples of "Ludox" were measured at intervals over several days, starting each time with the turbidimeter switched off and using the arrangement described in the methods selection above. The results from 10 measurements showed a mean value of %Tdif. (from water, %T adjusted to 100) of 27.18 with a standard deviation of 0.81. This result indicates therefore that stable commercially available, colloidal silica such as "Ludox" TM makes appropriate samples for process control of the solubilization crystal test.

It is also possible that particularly small crystals can have a significant effect on the subsequent behaviour of a photographic dispersion melt or coating presumably by acting as seeds for later crystal growth. The signal from the small crystals may need to be "amplified" by holding the solubilized suspension for a short time, for example 10 minutes, at 50°c before measuring the difference of %T.
The advantages of this crystal testing method over the microscopic methods generally utilized are as follows:-

(a) It is much less subjective

(b) A number is obtained which although not fully quantitative is nevertheless indicative of the growth of crystals on keeping of a dispersion or for the comparison of one dispersion with another

(c) Each measurement is on a 2ml sample, which is much more representative of the whole than the volume examined under a microscope, for example 10$\mu$l.

(d) It is readily learned

(e) It is not necessary that the coupler crystals polarize light, finally

(f) The solubilization can also be used to reveal other dispersion contaminants, such as bacterial and fungal colonies.

**Claims**

1. A method of assessing crystallization values of a dispersion which comprises the steps of:

   forming a solubilizing solution for a test dispersion,

   heating said solubilizing solution to a predetermined reaction temperature at or about the melting point of the test dispersion,

   inserting a turbidimeter probe into the heated solubilized solution to give a base line value,

   melting the dispersion and injecting the same into the solution to give a value of %T at time t = 0

   conducting turbidimetry to chart the translation of the dispersion to a solubilized dispersion to give a value at %T changing with time, continuing said readings for a predetermined time to give an extrapolatable plot, and extrapolating %T back to t = 0 to give value %Tdif and if necessary comparing %Tdif against a calibration curve to give a crystallization value.

2. A method according to claim 1 characterised in that the calibration curve is achieved either by establishing crystallization values for a test dispersion by microscopic means, by rapidly filtering off the crystals from the tested solubilized solution and weighing, or by adding a known weight of crystals to a fresh uncrystallized dispersion.

3. A method according to either of claims 1 or 2 characterised in that the test dispersion is a photographic dispersion including a stabilizer and/or a coupler.

4. A method according to any of claims 1 to 3 characterised in that heating takes place at 45 to 65°c when the melting point of the test dispersion is about 40°c.

5. A method according to any of claims 1 to 4 wherein the % of test dispersion is about 10% of the solubilizing solution.

6. A method according to any preceding claim wherein colorimetery is effected by means of a chart recorder.

7. A method according to any of claims 1 to 6 which comprises utilizing an apparatus which comprises

   (a) a heatable transparent cell including stirring means,

   (b) a colorimeter probe positioned in said cell,

   (c) means for control of the temperature of said cell and means for introducing both the test dispersion and the solubilizing solution to the said cell, and

   (d) recording means for recording the light scattering effects of the solubilization process.

8. A method according to claim 7 wherein the stirring means is a magnetic stirrer.

9. An method according to either of claims 7 or 8 wherein the heatable transparent cell is a double walled glass cell operatively associated with a thermostatic bath.

10. A method according to any of claims 7 to 9 wherein the recording means is a chart recorder.

# Fig.1

## Plots of Crystallization v. % AQ Phase.

*Fig.2*

10

14    13

12

11

*Fig. 3*

10

19

15    21

17

14

13

16    11    12    18

20

| Colorimeter<br>+ probe | Cell<br>+ stirrer | Dispenser | Thermostatic<br>bath |

# Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3 151 504 (MERCK)<br>* page 7, line 21 - line 29 *<br>--- | 1,7 | G03C7/388<br>G01N21/85<br>G01N25/14 |
| A | US-A-4 672 218 (CHRISMAN ET AL.)<br>* the whole document *<br>--- | 1,7 | |
| A | PATENT ABSTRACTS OF JAPAN<br>vol. 9, no. 167 (P-372)(1890) 12 July 1985<br>& JP-A-60 044 852 ( TSUKISHIMA KIKAI ) 11 March 1985<br>* abstract *<br>----- | 1,7 | |
| | | | TECHNICAL FIELDS SEARCHED (Int. Cl.5 ) |
| | | | G03C<br>G01N |

The present search report has been drawn up for all claims

| Place of search | Date of completion of the search | Examiner |
|---|---|---|
| THE HAGUE | 07 APRIL 1993 | MAGRIZOS S. |